# EUROPÄISCHE PATENTSCHRIFT

(11) **EP 1 532 482 B1**
(45) Veröffentlichungstag und Bekanntmachung des Hinweises auf die Patenterteilung: **19.04.2006**
(21) Anmeldenummer: 03789324.5
(22) Anmeldetag: 18.12.2003
(51) Int. Cl.: G02F 1/03

(54) **POCKELSZELLE MIT KÜHLKÖRPER**
POCKELS CELL COMPRISING A COOLING MEMBER
CELLULE DE POCKELS AVEC DISSIPATEUR DE CHALEUR

(30) Priorität: 19.12.2002 DE 10259770
(43) Veröffentlichungstag der Anmeldung: 25.05.2005
(73) Patentinhaber: LINOS Photonics GmbH & Co. KG, 37081 Göttingen (DE)
(72) Erfinder: Stefan Balle, Germering (DE); Sven Poggel, 82216 Maisach (DE); FEHN, Thomas, 96317 Kronach (DE)
(74) Vertreter: Säger, Manfred
(86) Internationale Anmeldenummer: PCT/EP2003/014462
(87) Internationale Veröffentlichungsnummer: WO 2004/057412

(56) Entgegenhaltungen:
- US-A- 3 659 917
- US-A- 4 301 362
- US-A- 4 379 620
- US-A- 4 998 803
- LEBIUSH E ET AL: "RTP as a Q-switch for high repetition rate applications" OSA TRENDS IN OPTICS AND PHOTONICS SERIES. ADVANCED SOLID STATE LASERS, Bd. 34, 13. - 16. Februar 2000, Seiten 63-65, XP009029096
- MCWRIGHT G M: "Cooled Pockels cell for laser fusion applications" OPTICAL AND QUANTUM ELECTRONICS, Bd. 18, Nr. 1, Januar 1986 (1986-01), Seiten 89-91, XP001180902
- WEAVER L F ET AL: "MULTIKILOWATT POCKELS CELL FOR HIGH AVERAGE POWER LASER SYSTEMS" JOURNAL OF APPLIED PHYSICS, AMERICAN INSTITUTE OF PHYSICS. NEW YORK, US, Bd. 68, Nr. 6, 15. September 1990 (1990-09-15), Seiten 2589-2598, XP000161572 ISSN: 0021-8979

## Beschreibung

Die Erfindung betrifft eine Pockelszelle gemäß dem Oberbegriff des Hauptanspruchs, nämlich mit zwei vorzugsweise identischen, in Strahlungsrichtung auf thermische Kompensation zueinander orientierte hintereinander und mit Abstand zueinander angeordneten, im Querschnitt quadratischen, quaderförmigen RTP-Kristallen, von denen jeder an zwei zueinander gegenüberliegenden Flächen mit Elektroden versehen ist, wobei diese Flächen des einen Kristalls zu jenen des anderen Kristalls um 90° bezüglich der Strahlungsrichtung gedreht sind.

Solche als elektrooptische Schalter wirkende Pockelszellen sind an sich bekannt , z.B. aus dem Artikel "RTP as a Q-switch for high repetition rate applications" von E. Lebinsh et al. in OSA Trends in Optics and Photonics Series, Advanced Solid State Lasers, Bd. 34, Seiten 63-65 (2000). Die optische Hintereinanderanordnung ist notwendig, um die temperaturabhängige Wirkung der Doppelbrechung zu eliminieren und ist an sich bekannt. Bei an die Elektroden angelegter Spannung addieren sich die elektrooptisch induzierten Phasenverschiebungen, und bei der Halbwellenspannung ist die Polarisationsrichtung am Ausgang der Kristallanordnung um 90° relativ zur Richtung am Eingang gedreht, was den gewünschten - optischen - Schalteffekt bewirkt.

Von Nachteil bei diesen bekannten Pockelszellen ist jedoch, daß die thermische Kompensation nur dann funktioniert, wenn die vorzugsweise identischen Kristalle exakt gleich lang sind. Nachdem die Kristalle einen Teil der in Strahlungsrichtung einfallenden Laserstrahlung absorbieren, wird diese lokal in Wärmeenergie umgewandelt und führt zu einer Erhöhung der Temperatur, was dazu führen kann, daß aufgrund einer unterschiedlichen thermischen Ausdehnung die Kristalle ungleich lang werden, was unerwünscht ist. Außerdem werden durch Temperaturunterschiede bedingte Unterschiede des Berechnungsindexes entlang der Strahlungsrichtung in den Kristallen den Kompensationseffekt verschlechtern.

Der Erfindung liegt deshalb die Aufgabe zugrunde, eine gattungsgemäße Pockelszelle gemäß dem Oberbegriff des Hauptanspruchs so weiterzubilden, daß trotz der teilweise durch den Kristall absorbierten Laserstrahlung die thermische Kompensation aufrechterhalten bleibt.

Diese Aufgabe wird bei einer gattungsgemäßen Pockelszelle gemäß dem Oberbegriff des Hauptanspruchs erfindungsgemäß durch dessen kennzeichnende Merkmale, nämlich dadurch gelöst, daß um die Außenseiten der Elektroden flexible, gut wärmeleitende sowie elektrisch isolierende, elektrisch hochspannungsfeste Kunststoff- oder Gummimatten vorgesehen sind und daß diese der Innenseite eines Kühlkörpers anliegen.

Mit dieser Ausgestaltung ist es möglich, die im Kristall entstehende Wärme möglichst gleichmäßig an den Kühlkörper- abzuführen, wodurch auch die Elektroden den Kristall mechanisch nur minimal verspannen, so daß insgesamt beide Kristalle trotz der in ihnen entstehenden Wärme gleich lang sind und sich an ihnen eine möglichst gleichmäßige Temperaturverteilung ergibt, ohne daß zugleich die Elektroden den Kristall mechanisch verspannen. Es ergibt sich somit ein Höchstmaß an exakter thermischer Kompensation der Pockelszelle durch die erfindungsgemäß vorgesehene Kühlung, wobei diese über jede der insgesamt vier mit Elektroden versehenen Flächen der beiden Kristalle homogen und in Bezug auf die beiden Elektrodenflächen jedes Kristalls symmetrisch sind. Gleichzeitig werden die auch mittels der Elektroden zugleich mechanisch gehalterten Kristalle aufgrund der Verwendung der flexiblen Kunststoffmatten verspannungsarm gehaltert. Es können auch andere, als RTP-Kristalle verwendet werden, wenn diese wegen temperaturabhängiger Wirkung der Doppelbrechung auch eine Kompensation benötigen. Ebenso ist die Hintereinanderordnung von vier Kristallen erfindungsgemäß möglich.

Wenn in weiterer Ausgestaltung die Ausbildung der Kühlkörper und die Anordnung der Kristalle hierzu symmetrisch gewählt wird, so ergibt sich weiterhin eine über die Elektrodenflächenpaare jeweils benachbarter Kristalle homogene Kühlung.

Diese Kühlung wird erfindungsgemäß dadurch vergrößert, daß die Kühlkörper aus Kupfer bestehen und in Strahlungsrichtung verlaufende sowie symmetrisch zueinander angeordnete Kühlkanäle aufweisen.

Mit besonderem Vorteil werden benachbarte Kühlkanäle antiparallel von einer Kühlflüssigkeit durchströmt, wodurch sich auch eine homogene Verteilung der Temperatur ergibt.

Dieser Effekt kann dadurch noch verstärkt werden, daß auch die aus einem Winkelprofil eines elektrischen Leiters gebildeten Elektroden symmetrisch ausgebildet sind. Hierbei besteht jede der beiden Elektroden aus zwei bezüglich eines Symmetriepunktes punktsymmetrischen Teilen, die um die parallel zur Strahlungsrichtung durch den Symmetriepunkt verlaufende Symmetrieachse um 90° zueinander verdreht sind, wobei die eine Elektrode geteilt ausgebildet sein kann, um Wärmespannungen minimal zu halten.

Der Fachmann weiß es ferner zu schätzen, daß der elektrische Anschluss für die beiden Elektroden durch jede Halbschale des Kühlkörpers elektrisch isoliert und parallel zu deren Trennebene hindurchgeführt ist, wodurch das Prinzip der Symmetrie auch konsequent weitergeführt ist und der gleichmäßigen Temperaturverteilung bzw. Kühlung der Kristalle zuträglich ist.

Weitere zweckmäßige Ausgestaltungen und Weiterbildungen der Erfindung sind in den Unteransprüchen gekennzeichnet.

Ein bevorzugtes Ausführungsbeispiel der Erfindung wird nachfolgend unter Bezugnahme auf die Zeichnung näher erläutert. In dieser zeigt:
- Figur 1a: die Pockelszelle mit Kühlkörper und Elektroden als Sprengbild;
- Figur 1b: die Pockelszelle gemäß Figur 1 in Detailansicht und als weiteres Sprengbild in anderer Perspektive;
- Figur 2: die Pockelszelle mit Kühlkörper gemäß Figur 1, im zusammengebauten Zustand und in teilweise ausgebrochener Ansicht;
- Figur 3: die Pockelszelle gemäß Figur 1 im halb zusammengebauten Zustand und in perspektivischer Darstellung;
- Figur 4: die Pockelszelle gemäß Figur 1, in Frontansicht.

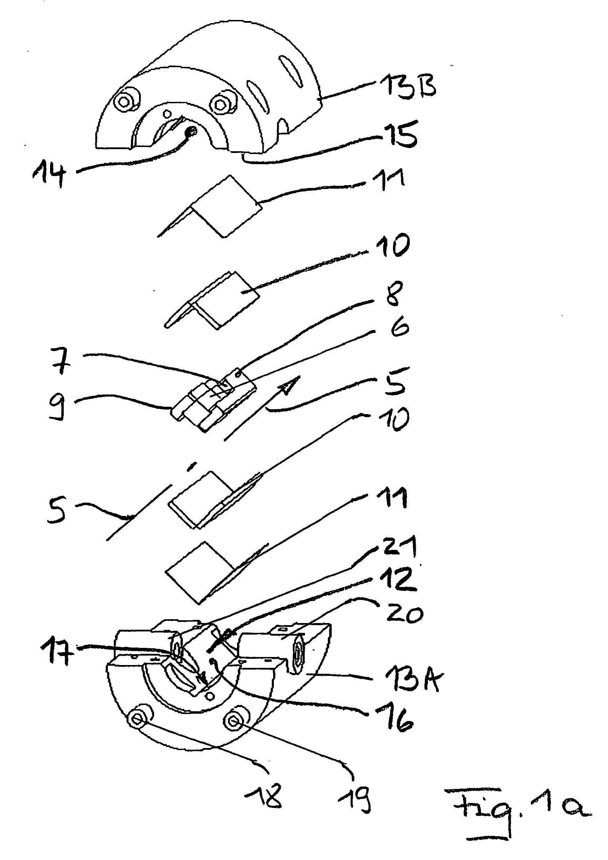

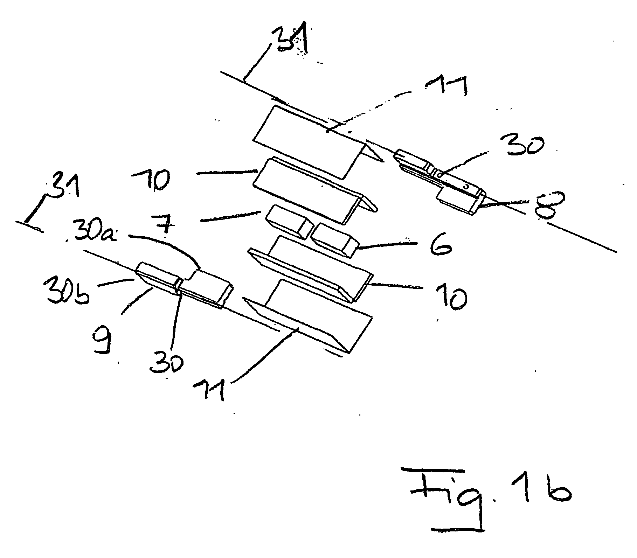

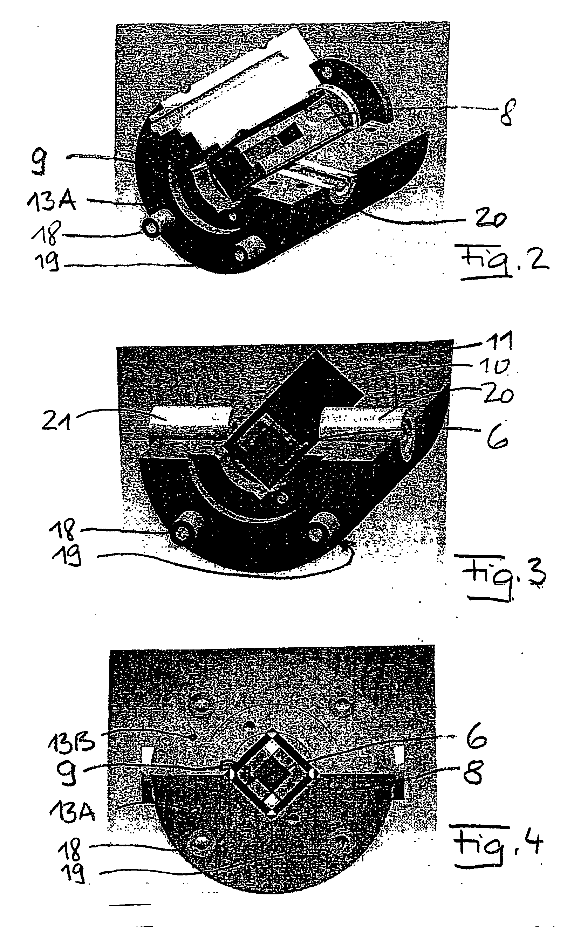

In Figur 1a ist die Pockelszelle als Sprengbild dargestellt. Es sind zwei in Strahlungsrichtung 5 hintereinander und mit Abstand voneinander angeordnete, im Querschnitt quadratische sowie quaderförmige RTP-Kristalle 6, 7 vorgesehen, von denen jeder an zwei einander gegenüberliegenden Flächen mit Elektroden 8, 9 aus Metall versehen ist, wobei die Flächen des einen Kristalls zu jenen des anderen Kristalls um 90° bezüglich der Strahlungsrichtung 5 gedreht sind. Die Elektroden sind an den einander gegenüberliegenden Flächen des Kristalls z.B. durch Aufkleben angebracht.

Die eine der beiden Elektroden 8 ist hierbei vorzugsweise einstückig und bezüglich eines Symmetriepunktes 30 punktsymmetrisch (Figur 1b) ausgebildet, die um die parallel zur Strahlungsrichtung 5 durch den Symmetriepunkt 30 verlaufende Symmetrieachse 31 um 90° zueinander verdreht sind. Die andere Elektrode 9 ist hierbei zweistückig so ausgebildet, daß der Symmetriepunkt 30 von den beiden Einzelteilen 30a, 30b gleich weit beabstandet ist und Symmetrieachsen für eventuell zwei Symmetriepunkte 8 und 9 definieren.

Um die Außenseiten der Elektroden sind flexible, gut wärmeleitende sowie elektrisch isolierende, elektrisch hochspannungsfeste Matten 10 aus Kunststoff oder Gummi vorgesehen. Diese Matten 10 sind über ein doppelseitiges Klebeband 11, welches gut wärmeleitend sowie elektrisch isolierend ausgebildet ist, an der Innenseite 12 eines insgesamt mit 13A, 13B, bezeichneten Kühlkörpers angeklebt und liegen infolge dieser Innenseite 12 fest an. Der Kühlkörper ist aus zwei Halbschalen 13A, 13B, ausgebildet, die unter Freilassung des Aufnahmebereichs 14 für die beiden mit den Kunststoffmatten 10 umgebenen Kristalle 6, 7 an ihrer Trennebene 15 fest miteinander verbindbar sind.

Der Aufnahmebereich 14 jeder Halbschale 13A, 13B weist zwei senkrecht aufeinanderstehende, sich parallel zur Strahlungsrichtung 5 erstreckende, ebene Anlageflächen, 16, 17 auf, von denen die eine einer Elektrode und die andere einer elektrodenfreien Fläche jedes Kristalls zugewandt ist.

Jeder Kühlkörper 13A, 13B weist parallele zur Strahlungsrichtung 5 verlaufende, jeweils eine Kanalachse aufweisende Kühlkanäle 18, 19 gleichen Durchmessers auf, die jeweils gleichen Abstand von der Trennebene 15 und den doppelten Abstand voneinander besitzen. Die Kühlkanäle dienen zum Durchströmen für eine Kühlflüssigkeit. Die Kanalachse jedes Kühlkanals 18, 19 der beiden Kühlkörper 13A und 13B verlaufen hierbei parallel zueinander. Ferner ist der Abstand jeder Kanalachse der Kühlkanäle 18, 19 von der zugehörigen Anlagefläche 16, 17 gleich groß.

Beide Kühlkörper bestehen aus Kupfer, wobei beide Halbschalen identisch ausgebildet sind und den beim wiedergegebenen Ausführungsbeispiel im wesentlichen säulenförmigen Kühlkörper 13 bilden. Aufgrund der symmetrischen Ausgestaltung der Kühlkanäle 18, 19 der beiden Halbschalen 13A, 13B des Kühlkörpers 13 mit seinen Anlageflächen 16, 17 ist eine gleichmäßige Kühlwirkung auf die in der Innenseite 12 des Kühlkörpers angeordnete Pockelszelle möglich.

Weiterhin ist jede Halbschale 13A, 13B des Kühlkörpers 13 mit einem Anschluß 20, 21 für jede der beiden Elektroden versehen. Hierbei ist jeder Anschluß als hülsenartiges Teil ausgebildet und parallel zu deren Trennebene 15 so ausgerichtet, daß die eine Hälfte der Hülse in der einen und die andere Hälfte der Hülse in der anderen Halbschale des Kühlkörpers angeordnet ist. Der elektrische Anschluß ist mit Vorteil ferner im Bereich des Freiraums zwischen den voneinander beabstandet angeordneten beiden Kristallen angeordnet. Durch die Anordnung der Kristalle 6, 7 der Pockelszelle in den beiden Halbschalen 13A, 13B des Kühlkörpers sowie dessen Ausbildung mit Kühlkanälen und elektrischen Anschlüssen für die Elektroden 8, 9 der Pockelszelle ist eine gleichmäßige Kühlung und damit weitestgehend gradientenfreie Temperaturverteilung möglich. Infolgedessen ist ein sehr hoher Wirkungsgrad bei der thermischen Kompensation der beiden Kristalle möglich. Zugleich sind diese besonders verspannungsarm gehaltert, was einerseits Beschädigungen verhindert, andererseits auch keine die thermische Kompensation hindernden mechanischen Spannungen in dem Kristall zuläßt.

## Patentansprüche

1. Pockelszelle mit zwei in Strahlungsrichtung (5) auf thermische Kompensation zueinander orientierten, hintereinander und mit Abstand zueinander angeordneten, im Querschnitt quadratischen, quaderförmigen RTP-Kristallen (6,7), von denen jeder an zwei einander gegenüberliegenden Flächen mit Elektroden (8, 9) versehen ist, wobei diese Flächen des einen Kristalls zu jenen des anderen Kristalls um 90° bezüglich der Strahlungsrichtung (5) gedreht sind, **dadurch gekennzeichnet, daß** die Pockelszelle einen Kühlkörper aufweist, daß um die Außenseiten der Elektroden (8, 9) flexible, gut wärmeleitende, sowie elektrisch isolierende, elektrisch hochspannungsfeste Kunststoffmatten (10) vorgesehen sind und daß diese der Innenseite (12) des Kühlkörpers (13A, 13B) anliegen.

2. Pockelszelle nach Anspruch 1, **dadurch gekennzeichnet, daß** der Kühlkörper (13A, 13B) aus zwei Halbschalen besteht, die unter Freilassung des Aufnahmebereichs (14) für die beiden mit den Kunststoffmatten (10) umgebenen Kristalle (6, 7) an ihrer Trennebene (15) fest miteinander verbindbar sind.

3. Pockelszelle nach Anspruch 1 oder 2, **dadurch gekennzeichnet, daß** der Aufnahmebereich (14) jeder Halbschale zwei senkrecht aufeinanderstehende, sich parallel zur Strahlungsrichtung (5) erstreckende, ebene Anlageflächen (16, 17) aufweist, von denen die eine einer Elektrode und die andere einer elektrodenfreien Fläche des Kristalls zugewandt ist.

4. Pockelszelle nach einem der Ansprüche 1 bis 3, **dadurch gekennzeichnet, daß** der Kühlkörper mit parallel zur Strahlungsrichtung verlaufenden, eine Kanalachse jeweils aufweisenden Kühlkanälen gleichen Durchmessers und mit gleichem Abstand von der Tennebene des Kühlkörpers und mit doppelt so großem Abstand voneinander für eine Kühlflüssigkeit versehen ist.

5. Pockelszelle nach Anspruch 4, **dadurch gekennzeichnet, daß** jede Halbschale des Kühlkörpers mit zwei Kühlkanälen versehen ist.

6. Pockelszelle nach Anspruch 5, **dadurch gekennzeichnet, daß** jede Anlagefläche von der Kanalachse des jeweils zugehörigen Kühlkanals gleich weit entfernt angeordnet ist.

7. Pockelszelle nach einem der Ansprüche 1 bis 6, **dadurch gekennzeichnet, daß** zueinander benachbarte Kühlkanäle zum gegensinnigen Durchströmen der Kühlflüssigkeit ausgebildet sind.

8. Pockelszelle nach einem der Ansprüche 1 bis 7, **dadurch gekennzeichnet, daß** der Kühlkörper Kupfer enthält.

9. Pockelszelle nach einem der Ansprüche 1 bis 8, **dadurch gekennzeichnet, daß** beide Halbschalen identisch ausgebildet sind und vorzugsweise einen insgesamt säulenförmigen Kühlkörper bilden.

10. Pockelszelle nach Anspruch 1, **dadurch gekennzeichnet, daß** die Kunststoffmatte mit der Elektrode vorzugsweise mittels eines gut wärmeleitenden Klebers kontaktiert ist.

11. Pockelszelle nach Anspruch 1 oder 10, **dadurch gekennzeichnet, daß** die Kunststoffmatte mit der Anlagefläche des Kühlkörpers vorzugsweise durch Ankleben kontaktiert ist.

12. Pockelszelle nach Anspruch 11, **dadurch gekennzeichnet, daß** die Kunststoffmatte an die Anlageflächen des Kühlkörpers mittels eines doppelseitig klebenden, gut wärmeleitenden, elektrisch isolierenden und elektrisch hochspannungsfesten Klebebandes angeklebt ist.

13. Pockelszelle nach einem der Ansprüche 1 bis 12, **dadurch gekennzeichnet, daß** die Kunststoffmatte auch auf den elektrodenfreien Seiten des Kristalls anliegen.

14. Pockelszelle nach Anspruch 1, **dadurch gekennzeichnet, daß** für die beiden Kristalle zwei Elektroden vorgesehen sind.

15. Pockelszelle nach Anspruch 14, **dadurch gekennzeichnet, daß** die beiden Elektroden identisch ausgebildet sind.

16. Pockelszelle nach Anspruch 15, **dadurch gekennzeichnet, daß** die Elektroden aus einem Winkelprofil eines elektrischen Leiters, vorzugsweise eines Metalls gebildet sind.

17. Pockelszelle nach Anspruch 16, **dadurch gekennzeichnet, daß** jede der beiden Elektroden aus zwei bezüglich eines Symmetriepunktes punktsymmetrischen Teilen besteht, die um die parallel zur Strahlungsrichtung durch den Symmetriepunkt verlaufende Symmetrieachse um 90° zueinander verdreht sind.

18. Pockelszelle nach Anspruch 17, **dadurch gekennzeichnet, daß** der elektrische Anschluß für die beiden Elektroden durch jede Halbschale elektrisch isoliert und parallel zu deren Trennebene hindurchgeführt ist.

19. Pockelszelle nach Anspruch 18, **dadurch gekennzeichnet, daß** der elektrische Anschluß im Bereich des Freiraums zwischen den beiden Kristallen angeordnet ist.

20. Pockelszelle nach Anspruch 19, **dadurch gekennzeichnet, daß** der Kühlkörper säulenförming ist und daß in dem säulenförmigen Kühlkörper bezüglich dessen parallel zu der Grund- und der dazu parallel angeordneten Deckseite verlaufenden Symmetrieebene die Kristalle spiegelsymmetrisch und gegebenenfalls um 90° gedreht zueinander angeordnet sind.

## Revendications

1. Cellule de Pockel comportant deux cristaux de RTP (6, 7) orientés en compensation thermique l'un par rapport à l'autre dans le sens du rayonnement (5), disposés l'un après l'autre et à une certaine distance l'un de l'autre, de section transversale quadratique, de forme parallélépipédique, dont chacun est muni d'électrodes (8, 9) sur deux surfaces opposées l'une à l'autre, ces surfaces d'un cristal par rapport à celles de l'autre cristal étant pivotées de 90° par rapport au sens du rayonnement (5), **caractérisée en ce que** la cellule de Pockel présente un corps de refroidissement, **en ce qu'**autour des faces extérieures des électrodes (8, 9) sont prévues des armures en matière plastique (10) flexibles, présentant une bonne conductibilité thermique, assurant une bonne isolation électrique, résistant aux hautes tensions électriques, et **en ce que** ces dernières reposent sur la face intérieure (12) du corps de refroidissement (13A, 13B).

2. Cellule de Pockel selon la revendication 1, **caractérisée en ce que** le corps de refroidissement (13A, 13B) est constitué de deux demi-coques qui peuvent être assemblées fixement l'une à l'autre au niveau de leur plan de joint (15) en laissant dégagée la zone de logement (14) des deux cristaux (6, 7) entourés des armures en matière plastique (10).

3. Cellule de Pockel selon la revendication 1 ou 2, **caractérisée en ce que** la zone de logement (14) de chaque demi-coque présente deux surfaces d'appui (16, 17) planes, perpendiculaires l'une à l'autre, s'étendant parallèlement au sens du rayonnement (5), dont l'une est orientée vers une électrode et l'autre vers une surface du cristal ne portant pas d'électrode.

4. Cellule de Pockel selon une des revendications 1 à 3, **caractérisée en ce que** le corps de refroidissement est muni de canaux de refroidissement destinés à un liquide de refroidissement parallèle au sens du rayonnement, présentant chacun un axe de canal, de même diamètre et à la même distance du plan de joint du corps de refroidissement et à une distance double l'un de l'autre.

5. Cellule de Pockel selon la revendication 4, **caractérisée en ce que** chaque demi-coque du corps de refroidissement est munie de deux canaux de refroidissement.

6. Cellule de Pockel selon la revendication 5, **caractérisée en ce que** chaque surface d'appui est disposée pour présenter le même éloignement par rapport à l'axe de canal respectif du canal de refroidissement associé.

7. Cellule de Pockel selon une des revendications 1 à 6, **caractérisée en ce que** deux canaux de refroidissement voisins l'un de l'autre sont conçus pour que le liquide de refroidissement les parcoure dans le sens opposé.

8. Cellule de Pockel selon une des revendications 1 à 7, **caractérisée en ce que** le corps de refroidissement contient du cuivre.

9. Cellule de Pockel selon une des revendications 1 à 8, **caractérisée en ce que** les deux demi-coques sont conçues pour être identiques et forment de préférence un corps de refroidissement complet en forme de colonne.

10. Cellule de Pockel selon la revendication 1, **caractérisée en ce que** l'armure en matière plastique est mise en contact avec l'électrode de préférence au moyen d'une colle présentant une bonne conductibilité thermique.

11. Cellule de Pockel selon la revendication 1 ou 10, **caractérisée en ce que** l'armure en matière plastique est mise en contact avec la surface d'appui du corps de refroidissement de préférence par collage.

12. Cellule de Pockel selon la revendication 11, **caractérisée en ce que** l'armure en matière plastique est collée à la surface d'appui du corps de refroidissement au moyen d'un ruban adhésif double face présentant une bonne conductibilité thermique, assurant une bonne isolation électrique, et résistant aux hautes tensions électriques.

13. Cellule de Pockel selon une des revendications 1 à 12, **caractérisée en ce que** les armures en matière plastique reposent également sur les faces du cristal ne portant pas d'électrode.

14. Cellule de Pockel selon la revendication 1, **caractérisée en ce que** deux électrodes sont prévues pour les deux cristaux.

15. Cellule de Pockel selon la revendication 14, **caractérisée en ce que** les deux électrodes sont conçues pour être identiques.

16. Cellule de Pockel selon la revendication 15, **caractérisée en ce que** les électrodes sont formées à partir d'un profilé angulaire d'un conducteur électrique, de préférence un métal.

17. Cellule de Pockel selon la revendication 16, **caractérisée en ce que** chacune des deux électrodes est constituée de deux parties présentant une symétrie ponctuelle par rapport à un point de symétrie, et qui présentent une torsion de 90° l'une par rapport à l'autre autour de l'axe de symétrie passant par le point de symétrie parallèlement au sens du rayonnement.

18. Cellule de Pockel selon la revendication 17, **caractérisée en ce que** le raccordement électrique pour les deux électrodes traverse chaque demi-coque de manière électriquement isolée et parallèlement à leur plan de joint.

19. Cellule de Pockel selon la revendication 18, **caractérisée en ce que** le raccordement électrique est disposé dans la zone de l'espace libre entre les deux cristaux.

20. Cellule de Pockel selon la revendication 19, **caractérisée en ce que** le corps de refroidissement est en forme de colonne, et **en ce que** les cristaux sont disposés dans le corps de refroidissement en forme de colonne selon une symétrie en miroir par rapport à son plan de symétrie passant parallèlement à la face du fond et à la face supérieure disposée parallèlement à cette dernière, et le cas échéant pivotés de 90° l'un par rapport à l'autre.

## Claims

1. Pockel's cell with two cuboidal RTP crystals (6, 7) of square cross-section arranged one behind the other in the direction of radiation (5) with a mutual spacing distance and orientated for mutual thermal compensation, each of which is provided with electrodes (8, 9) at two mutually-opposite surfaces, wherein these surfaces of the one crystal are rotated with reference to the direction of radiation (5) through 90° relative to those of the other crystal,
**characterised in that**
the Pockel's cell comprises a cooling element, that flexible, synthetic-material mats (10) with good thermal conductivity, electrical insulation and electrical high-voltage stability are provided around the external sides of the electrodes (8, 9), and that these are disposed in contact with the internal side (12) of the cooling element (13A, 13B).

2. Pockel's cell according to claim 1,
**characterised in that**
the cooling element (13A, 13B) consists of two half shells, which can be firmly connected to one another at their dividing plane (15) leaving open the retaining region (14) for the two crystals (6, 7) surrounded by the synthetic-material mats (10).

3. Pockel's cell according to claim 1 or 2,
**characterised in that**
the retaining region (14) of each half shell provides two flat contact surfaces (16, 17) disposed perpendicular to one another and extending parallel to the direction of radiation (5), one of which faces towards an electrode and the other faces towards an electrode-free surface of the crystal.

4. Pockel's cell according to any one of claims 1 to 3,
**characterised in that**
the cooling element is provided with cooling channels of the same diameter for a cooling fluid, each having a channel axis running parallel to the direction of radiation and each being disposed at the same spacing distance from the dividing plane of the cooling element and at double this spacing distance from one another.

5. Pockel's cell according to claim 4,
**characterised in that**
each half shell of the cooling element is provided with two cooling channels.

6. Pockel's cell according to claim 5
**characterised in that**
each contact surface is arranged at an equal distance from the channel axis of the respectively-associated cooling channel.

7. Pockel's cell according to any one of claims 1 to 6,
**characterised that**
mutually-adjacent cooling channels are designed for an opposite direction of flow of the cooling fluid.

8. Pockel's cell according to any one of claims 1 to 7,
**characterised in that**
the cooling element contains copper.

9. Pockel's cell according to any one of claims 1 to 8,
**characterised in that**
both half shells are designed in an identical manner and preferably form a cooling element with an overall columnar shape.

10. Pockel's cell according to claim 1,
**characterised in that**
the synthetic-material mat is preferably connected to the electrode by means of an adhesive with good thermal conductivity.

11. Pockel's cell according to claim 1 or 10,
**characterised in that**
the synthetic-material mat is preferably connected to the contact surface of the cooling element by gluing.

12. Pockel's cell according to claim 11,
**characterised in** the
the synthetic-material mat is glued to the contact surfaces of the cooling element by means of a double-sided adhesive tape with good thermal conductivity, electrical insulation and electrical high-voltage-stability.

13. Pockel's cell according to any one of claims 1 to 12,
**characterised in that**
the synthetic-material mats are also in contact with the electrode-free sides of the crystal.

14. Pockel's cell according to claim 1,
**characterised in that**
two electrodes are provided for the two crystals.

15. Pockel's cell according to claim 14,
**characterised in that**
the two electrodes are formed in an identical manner.

16. Pockel's cell according to claim 15,
**characterised in that**
the electrodes are formed from an angled profile of an electrical conductor, preferably a metal.

17. Pockel's cell according to claim 16,
**characterised in that**
each of the two electrodes consists of two parts, which are point-symmetrical with reference to a point of symmetry and which are rotated relative to one another through 90° about the axis of symmetry running through the point of symmetry parallel to the direction of radiation.

18. Pockel's cell according to claim 17,
**characterised in that**
the electrical connection for the two electrodes passes through each half shell in an electrically-insulated manner and parallel to their dividing plane.

19. Pockel's cell according to claim 18,
**characterised in that**
the electrical connection is arranged in the region of the free space between the two crystals.

20. Pockel's cell according to claim 19,
**characterised in that**
the cooling element is columnar in shape and that the crystals are arranged in mirror-image symmetry within the columnar cooling element with reference to its plane of symmetry running parallel to the bottom side and to the covering side disposed parallel to the latter, and optionally rotated through 90° relative to one another.
